# EUROPEAN PATENT APPLICATION

(11) **EP 4 418 728 A1**
(43) Date of publication of application: **21.08.2024**
(21) Application number: 22913730.2
(22) Date of filing: 25.10.2022
(51) Int. Cl.: H04W 28/08

(54) **DATA DISTRIBUTION METHOD AND APPARATUS, NETWORK DEVICE, AND STORAGE MEDIUM**

(30) Priority: 28.12.2021 CN 202111630769
(71) Applicant: ZTE Corporation, Shenzhen, Guangdong 518057 (CN)
(72) Inventor: LIU, Lili, Shenzhen, Guangdong 518057 (CN); ZHAO, Ding, Shenzhen, Guangdong 518057 (CN); XIE, Hao, Shenzhen, Guangdong 518057 (CN)
(74) Representative: Osterhoff, Utz
(86) International application number: PCT/CN2022/127469
(87) International publication number: WO 2023/124467

(57) **Abstract**

The present application proposes a data distribution method, a data distribution device, network equipment and a storage medium, and relates to the communication field. The data distribution method includes: obtaining a network element group, and allocating a transmission resource of a management network element to a network element to be distributed data in each network element group; the network element group includes a plurality of network elements to be distributed data with consistent network element attribute information, and the management network element is the network where the network element to be distributed data is located and is a network element provided with a network management function; taking a network element to be distributed data that successfully performs data distribution as a seed network element, and obtaining a current load condition of the seed network element; determining a transmission resource share allocated to a target network element according to the load condition and a concurrency degree of a preset seed network element, and the target network element is a network element in the network element group that has not obtained a transmission resource from the management network element; and allocating a transmission resource of the seed network element to the target network element according to the transmission resource share, so that the target network element utilizes a transmission resource allocated from the seed network element to perform data distribution.

## Description

### CROSS-REFERENCE TO RELATED APPLICATIONS

The present application claims priority to Chinese Patent Application No. 202111630769.8, filed on December 28, 2021, the content of which is incorporated herein by reference in its entirety.

### TECHNICAL FIELD

The embodiments of the present application relates to the communication field, and in particular to a data distribution method, a data distribution device, a network equipment and a storage medium.

### BACKGROUND

Currently, in various data transmission networks, most of the data transmission networks take network management as the control node in the data transmission network, while network elements exist in the network in a situation of large numbers and widely distributed to provide various network services. In this network architecture, the distribution of network element data is centralized. The network management communicates with the network element, the network element requests data from the network management and establishes a transmission channel with the network management, thus completing the distribution of large amounts of data.

However, due to the large amount of data, this kind of data distribution method makes the data transmission time of a single network element relatively long. Moreover, due to the large scale of network elements, the egress bandwidth of the network management is fixedly allocated during network construction, large-scale network elements centrally establish transmission channels to obtain data from the network management, thus causing the network management to become a bottleneck, and data transmission efficiency of the large-scale network element is low.

### SUMMARY

The main purpose of the embodiments of the present application is to propose a data distribution method, a data distribution device, a network equipment and a storage medium, so as to achieve efficient distribution of large amounts of data, and improve the success rate of data distribution.

To achieve the above objectives, embodiments of the present application provide a data distribution method, including: obtaining a network element group, and allocating a transmission resource of a management network element to a network element to be distributed data in the network element group, so that a network element to be distributed data that has obtained the transmission resource performs data distribution; the network element group includes a plurality of network elements to be distributed data with consistent network element attribute information, and the management network element is the network where the network element to be distributed data is located and is a network element provided with a network management function; taking a network element to be distributed data that successfully performs data distribution as a seed network element, and obtaining a current load condition of the seed network element; determining a transmission resource share allocated to a target network element according to the load condition and a concurrency degree of a preset seed network element, the target network element is a network element in the network element group that has not obtained a transmission resource from the management network element; and allocating a transmission resource of the seed network element to the target network element according to the transmission resource share, so that the target network element utilizes a transmission resource allocated from the seed network element to perform data distribution.

To achieve the above objectives, embodiments of the present application further propose a data distribution device, including:
a management module of a network element to be distributed data configured for obtaining a network element group, and allocating a transmission resource of a management network element to a network element to be distributed data in the network element group, so that a network element to be distributed data that has obtained the transmission resource performs data distribution; the network element group includes a plurality of network elements to be distributed data with consistent network element attribute information, and the management network element is the network where the network element to be distributed data is located and is a network element provided with a network management function;
a seed network element management module configured for taking a network element to be distributed data that successfully performs data distribution as a seed network element, and obtaining a current load condition of the seed network element; determining a transmission resource share allocated to a target network element according to the load condition and a concurrency degree of a preset seed network element, and the target network element is a network element in the network element group that has not obtained a transmission resource from the management network element; and
a target network element management module configured for allocating a transmission resource of the seed network element to the target network element according to the transmission resource share, so that the target network element utilizes a transmission resource allocated from the seed network element to perform data distribution.

To achieve the above objectives, embodiments of the present application further propose a network equipment, including: at least one processor and a memory communicatively connected to the at least one processor, the memory is configured to store an instruction executable by the at least one processor, and the instruction is executed by the at least one processor so that the at least one processor executes the above-mentioned data distribution method.

To achieve the above objectives, embodiments of the present application further propose a computer-readable storage medium storing a computer program, and when the computer program is executed by a processor, the above-mentioned data distribution method is implemented.

The present application proposes a data distribution method, a data distribution device, a network equipment and a storage medium, by allocating network elements with consistent network element attribute information to a group, obtaining a network element group, performing data distribution in a network element group whose network element attribute information is consistent, thus improving the success rate of data distribution. Then, allocating a transmission resource of a management network element to a network element to be distributed data in each network element group, so that a network element to be distributed data that has obtained the transmission resource performs data distribution; taking a network element to be distributed data that successfully performs data distribution as a seed network element; determining a transmission resource share allocated to a target network element according to the load condition of a seed network element and a concurrency degree of a seed network element; allocating a transmission resource of the seed network element to the target network element according to the transmission resource share, so that the target network element can utilizes the allocated transmission resource to perform data distribution. Therefore, the transmission resource of the management network element can be fully utilized, and the concurrency capability of each network element in the network element group is enhanced, thereby improving the efficiency of data distribution, and preventing the management network element from becoming a bottleneck for data distribution.

### BRIEF DESCRIPTION OF THE DRAWINGS

One or more embodiments are exemplified by the figures in the corresponding drawings, and these exemplary illustrations do not constitute limitations to the embodiments.
FIG. 1 is a first flow chart of a data distribution method according to an embodiment of the present application.
FIG. 2 is a second flow chart of the data distribution method according to an embodiment of the present application.
FIG. 3 is a structural schematic view of a data distribution device according to an embodiment of the present application.
FIG. 4 is a structural schematic view of network equipment according to an implementation of the present application.

### DETAILED DESCRIPTION OF THE EMBODIMENTS

In order to make the purpose, technical solutions and advantages of the embodiments of the present application clearer, each embodiment of the present application will be described in detail below with reference to the accompanying drawings. However, those skilled in the art can understand that in each embodiment of the present application, many technical details are provided to enable readers to better understand the present application. However, even without these technical details and various changes and modifications based on the following embodiments, the technical solution claimed in the present application can also be implemented. The division of the following embodiments is for the convenience of description and should not constitute any limitation on the specific implementation of the present application. The various embodiments can be combined with each other and referenced with each other on the premise that there is no contradiction.

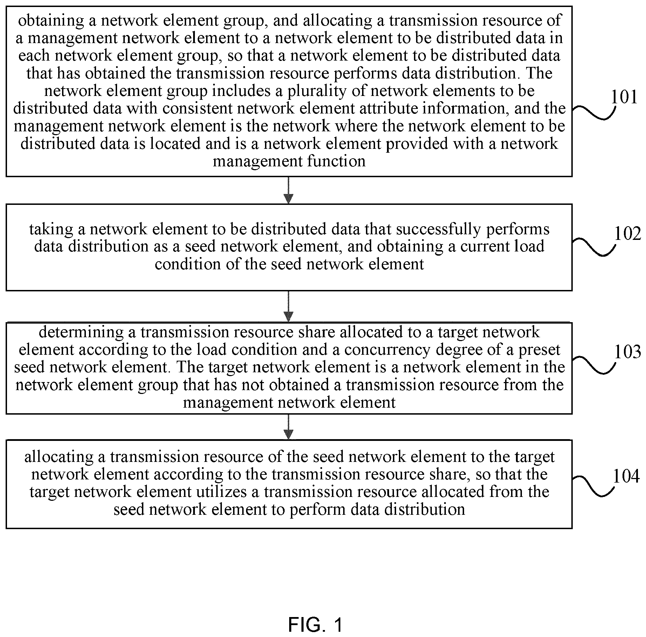

The embodiment of the present application relates to a data distribution method, as shown in FIG. 1, including:
Step 101: obtaining a network element group, and allocating a transmission resource of a management network element to a network element to be distributed data in each network element group, so that a network element to be distributed data that has obtained the transmission resource performs data distribution. The network element group includes a plurality of network elements to be distributed data with consistent network element attribute information, and the management network element is the network where the network element to be distributed data is located and is a network element provided with a network management function.

In this embodiment, the present application groups network elements in advance, obtains network element attribute information, and divides network elements with consistent attribute information into a group. It should be noted that for different data transmission networks and application scenarios, the obtained network element attribute information is different. For example, network elements that support the same function and the same communication protocol can be divided into a group. For another example, the physical equipment corresponding to the network element is a base station, and base stations of the same type can be divided into a group according to the base station type (macro base station, micro base station, etc.). Certainly, the network element attribute information is not limited here and can be determined according to the specific grouping method.

In addition, when allocating the transmission resource of the management network element to the network element to be distributed data in the network element group, resource allocation between network element groups can be uniform distribution or non-uniform distribution. When the distribution is non-uniform, it can be distributed according to the number of network elements to be distributed data in the network element group. That is, a network element group with a large number of network elements to be distributed data obtains a large number of transmission resources, and a network element group with a small number of network elements to be distributed data obtains a small number of transmission resources.

When allocating resources to each network element to be distributed data in the network element group, it can be allocated according to the hardware condition of each network element to be distributed data or preset priority of each network element to be distributed data. That is, a network element to be distributed data with a good hardware condition will obtain more transmission resources, and the network element to be distributed data with a higher priority will obtain more transmission resources. It should be noted that each network element to be distributed data in the network element group may not necessarily obtain the transmission resource of the management network element. For example, fifty transmission resources of the management network element are provided, ten transmission resources allocated to the first network element group are provided, one hundred network elements to be distributed data are provided in the network element group, thus, ten network elements to be distributed data in the network element group can obtain transmission resources, and ninety network elements to be distributed data in the network element group do not obtain transmission resources.

Step 102: taking a network element to be distributed data that successfully performs data distribution as a seed network element, and obtaining a current load condition of the seed network element.

In this embodiment, after the network element to be distributed data obtains the transmission resource of the management network element, it can establish a transmission channel with the management network element, obtain data from the management network element, and distribute the data to the corresponding network element. It should be noted here that transmission resources refer to various resources necessary to establish transmission channels between network elements. As long as network elements have transmission resources, they can establish transmission channels and transmit data. Further, taking the network element to be distributed data that successfully performs data distribution as the seed network element, so that the seed network element can be equivalent to a small management network element. Using the seed network element to further perform data distribution, thus improving the efficiency of data distribution.

In an embodiment, for the network element to be distributed data that has failed to distribute date, reallocating the transmission resource of the seed network element to the network element to be distributed data that has failed to distribute date, so that the network element to be distributed data that has failed to distribute data performs data distribution again. It should be noted that data distribution failure may be data acquisition failure, or may also be transmission channel establishment failure. Therefore, for the network element whose data transmission fails, reallocating the transmission resource of the seed network element to the network element, thus causing the network element to establish a transmission channel with the seed network element, and requesting data distribution from the seed network element. That is, changing the source of data acquisition.

In addition, the load condition of the seed network element can be determined by resource consumption, the amount of data to be transmitted, or other information.

Step 103: determining a transmission resource share allocated to a target network element according to the load condition and a concurrency degree of a preset seed network element. The target network element is a network element in the network element group that has not obtained a transmission resource from the management network element.

In an embodiment, after step 102, further including: in response to that after the seed network element completes a task of the data distribution, recycling the transmission resource of the seed network element to the management network element.

In this embodiment, the concurrency degree of the network element means that the network element can establish transmission channels with several other network elements. The concurrency degree of the seed network element is configured in advance. Determining the transmission resource share allocated to the target network element according to the load condition and a concurrency degree of a seed network element, after the target network element obtains the transmission resource of the seed network element, the target network element establishes a transmission channel with the seed network element, thus, the target network element can obtain data from the seed network element and distribute the data to the corresponding network element. It should be noted that, in the process that the seed network element allocates the transmission resources to the target network element, the management network element will further continue to allocate its own allocable transmission resources to network elements that have not obtained transmission resources. As long as there is an allocable transmission resource, the management network element and the seed network element will allocate the transmission resource.

Step 104: allocating a transmission resource of the seed network element to the target network element according to the transmission resource share, so that the target network element utilizes a transmission resource allocated from the seed network element to perform data distribution.

In an embodiment, after step 104, further including: in response to that the target network element fails to utilize the allocated transmission resource to perform data distribution, allocating a transmission resource of another seed network element in the network element group to the target network element, or allocating the transmission resource of the management network element to the target network element.

It should be noted that the data distribution failure may be data acquisition failure, or may also be transmission channel establishment failure. Therefore, for the network element whose data transmission fails, specifically, assuming that the current seed network element includes A, B, C and management network element G, if when the seed network element A allocates the transmission resource to the target network element, and the target network element utilizes the transmission resource allocated by the seed network element A to perform data distribution, then the transmission resource of the seed network element B, or the transmission resource of the seed network element C, or the transmission resource of the management network element G can be reallocated to the target network element. Thus, establishing a transmission channel between the target network element and the seed network element B, or between the target network element and the seed network element C, or between the target network element and the management network element G, and requesting data distribution from the seed network element B, or seed network element C, or management network element G.

In addition, after step 104, a target network element that successfully performs data distribution can further be configured as the seed network element, and executing the obtaining the current load condition of the seed network element and subsequent steps repeatedly until the data distribution is completed.

In an embodiment, the data distribution method further includes: establishing a seed network element list, and updating and maintaining a number of the seed network elements, the transmission resource condition, and a data distribution condition. Certainly, in addition to establishing a seed network element list, it can further establish a target network element list to manage network elements that have not obtained transmission resources.

The data distribution method proposed in the present application obtains a network element group by allocating network elements with consistent network element attribute information to a group, performing data distribution in a network element group whose network element attribute information is consistent, thus improving the success rate of data distribution. Then, allocating a transmission resource of a management network element to a network element to be distributed data in each network element group, so that a network element to be distributed data that has obtained the transmission resource performs data distribution; taking a network element to be distributed data that successfully performs data distribution as a seed network element; determining a transmission resource share allocated to a target network element according to the load condition of a seed network element and a concurrency degree of a seed network element; allocating a transmission resource of the seed network element to the target network element according to the transmission resource share, so that the target network element can utilizes the allocated transmission resource to perform data distribution. Therefore, the transmission resource of the management network element can be fully utilized, the concurrency capability of each network element in the network element group is enhanced, thereby improving the efficiency of data distribution, and preventing the management network element from becoming a bottleneck for data distribution.

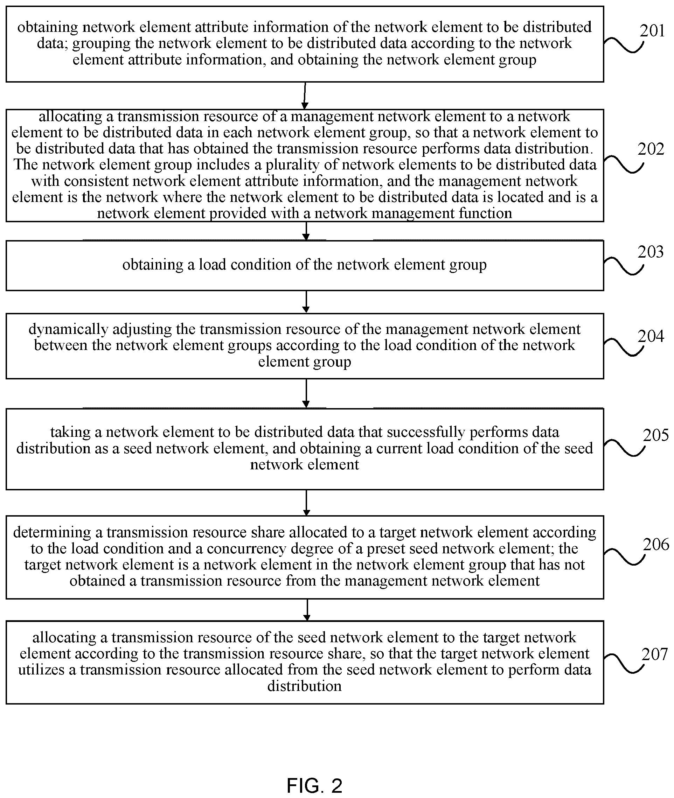

The embodiment of the present application relates to a data distribution method, as shown in FIG. 2, including:
Step 201: obtaining network element attribute information of the network element to be distributed data; grouping the network element to be distributed data according to the network element attribute information, and obtaining the network element group.

In an embodiment, the network element attribute information is network element configuration information, or data file version information adapted to the network element, or network element connectivity information. Specifically, the grouping the network element to be distributed data according to the network element attribute information, and obtaining the network element group includes: in response to that the network element attribute information is the network element configuration information, allocating network elements to be distributed data whose hardware configuration information in the network element configuration information and wireless configuration information in the network element configuration information are both identical to a group, and obtaining the network element group; in response to that the network element attribute information is the data file version information adapted to the network element, allocating network elements to be distributed data whose data file version information adapted to the network element are consistent to a group, and obtaining the network element group; and in response to that the network element attribute information is the network element connectivity information, allocating interconnected network elements to be distributed data to a group according to the network element connectivity information and a minimum routing hop rule, and obtaining the network element group.

In this embodiment, the network element configuration information may include hardware configuration information of the network element and wireless configuration information of the network element. For example, hardware configuration information includes main control board type, main control board function mode, and standards supported by main control board. Wireless configuration information may be wireless configuration standard information (for example, 5GNR standard, LTE standard, NB standard, etc.). In addition, the data file version information adapted to the network element is determined by the type of the single board. Different types of single boards in the network equipment have different adapted data file versions.

Step 202: allocating a transmission resource of a management network element to a network element to be distributed data in each network element group, so that a network element to be distributed data that has obtained the transmission resource performs data distribution. The network element group includes a plurality of network elements to be distributed data with consistent network element attribute information, and the management network element is the network where the network element to be distributed data is located and is a network element provided with a network management function.

In this embodiment, the specific implementation details of step 202 are the same as the specific implementation details of step 101, and will not be described again.

Step 203: obtaining a load condition of the network element group.

Step 204: dynamically adjusting the transmission resource of the management network element between the network element groups according to the load condition of the network element group.

In this embodiment, the load condition of the network element group can be determined according to the resource consumption of the network element group, the amount of data to be transmitted, or other information. Dynamically adjusting the transmission resource of the management network element between the network element groups according to the load condition of each network element group. That is, the present application not only schedules transmission resources within a group, but also schedules transmission resources between groups, thus forming a two-level scheduling mechanism. It should be noted that the transmission resource adjustment between groups can be performed at any time in the data distribution method. This is only a specific embodiment, and the order of the steps is not limited.

Step 205: taking a network element to be distributed data that successfully performs data distribution as a seed network element, and obtaining a current load condition of the seed network element.

Step 206: determining a transmission resource share allocated to a target network element according to the load condition and a concurrency degree of a preset seed network element. The target network element is a network element in the network element group that has not obtained a transmission resource from the management network element.

In this embodiment, specifically, determining a transmission resource that has been occupied by the seed network element and a transmission resource that needs to be reserved according to the load condition of the seed network element and the concurrency degree of the preset seed network element; determining the transmission resource share allocated to the target network element according to the transmission resource that has been occupied by the seed network element and the transmission resource that needs to be reserved. It should be noted that if the seed network element has completed the task of the data distribution, there is no need to reserve transmission resources.

Step 207: allocating a transmission resource of the seed network element to the target network element according to the transmission resource share, so that the target network element utilizes a transmission resource allocated from the seed network element to perform data distribution.

The data distribution method proposed in the present application obtains a network element group by allocating network elements with consistent network element attribute information to a group, performing data distribution in a network element group whose network element attribute information is consistent, thus improving the success rate of data distribution. Then, allocating a transmission resource of a management network element to a network element to be distributed data in each network element group, so that a network element to be distributed data that has obtained the transmission resource performs data distribution; taking a network element to be distributed data that successfully performs data distribution as a seed network element; determining a transmission resource share allocated to a target network element according to the load condition of a seed network element and a concurrency degree of a seed network element; allocating a transmission resource of the seed network element to the target network element according to the transmission resource share, so that the target network element can utilizes the allocated transmission resource to perform data distribution. Therefore, the transmission resource of the management network element can be fully utilized, the concurrency capability of each network element in the network element group is enhanced, thereby improving the efficiency of data distribution, and preventing the management network element from becoming a bottleneck for data distribution.

In addition, it should be understood that the steps of the various methods above are divided just for the purpose of clear description. During implementation, they can be combined into one step or perform splitting of some steps into multiple steps. As long as the same logical relationship is included, it is within the scope of the present application. Adding insignificant modifications or introducing insignificant designs to the process, but not changing the core design of the process, are within the scope of the present application.

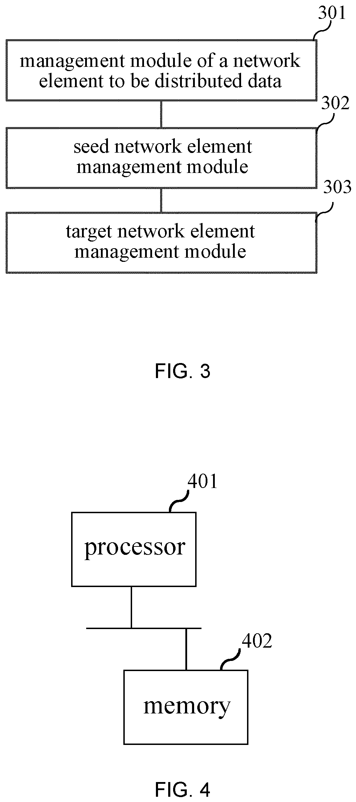

The embodiment of the present application relates to a data distribution device, as shown in FIG. 3, including:
a management module of a network element to be distributed data 301 configured for obtaining a network element group, allocating a transmission resource of a management network element to a network element to be distributed data in each network element group, so that a network element to be distributed data that has obtained the transmission resource performs data distribution; the network element group includes a plurality of network elements to be distributed data with consistent network element attribute information, and the management network element is the network where the network element to be distributed data is located and is a network element provided with a network management function;
a seed network element management module 302 configured for taking a network element to be distributed data that successfully performs data distribution as a seed network element, and obtaining a current load condition of the seed network element; determining a transmission resource share allocated to a target network element according to the load condition and a concurrency degree of a preset seed network element; the target network element is a network element in the network element group that has not obtained a transmission resource from the management network element; and
a target network element management module 303 configured for allocating a transmission resource of the seed network element to the target network element according to the transmission resource share, so that the target network element utilizes a transmission resource allocated from the seed network element to perform data distribution.

It should be noted that this device embodiment is mainly aimed at a description of the data distribution method provided in the method embodiment at the software implementation level, and its implementation further needs to rely on hardware support. For example, the functions of related modules can be deployed to the processor so that the processor can run to implement the corresponding functions. In particular, the relevant data generated by the operation can be stored in the memory for subsequent inspection and use.

It is worth mentioning that each module involved in this embodiment is a logical module. In practical applications, a logical unit can be a physical unit or a part of a physical unit, and further can be implemented as a combination of multiple physical units. In addition, in order to highlight the innovative part of the present application, unit that is not closely related to solving the technical problems raised in the present application is not introduced in this embodiment, but this does not mean that other units do not exist in this embodiment.

It is not difficult to find that this embodiment is a device embodiment corresponding to the embodiments of the data distribution method, and this embodiment can be implemented in cooperation with the above method embodiments. The relevant technical details and technical effects mentioned in the above embodiments are still valid in this embodiment, and will not be described again in order to reduce duplication. Correspondingly, the relevant technical details mentioned in this embodiment can also be applied to the above embodiments.

An embodiment of the present application relates to a network equipment, as shown in FIG. 4, including: at least one processor 401, and a memory 402 communicatively connected to the at least one processor 401. The memory 402 is configured to store an instruction executable by the at least one processor 401, and the instruction is executed by the at least one processor 401 so that the at least one processor 401 can execute the data distribution method in the above embodiments.

The memory and the processor are connected by adopting bus mode. The bus can include any number of interconnected buses and bridges. The bus connects various circuits of one or more processors and memories together. The bus further connects together various other circuits such as peripherals, voltage regulators, and power management circuits, which are all well known in the art and therefore will not be further described herein. The bus interface provides the interface between the bus and the transceiver. A transceiver may be one element or may be multiple elements, such as multiple receivers and transmitters, providing a unit for communicating with various other devices over a transmission medium. The data processed by the processor is transmitted on the wireless medium by the antenna. Furthermore, the antenna further receives the data and transmits the data to the processor.

The processor is responsible for managing the bus and general processing, and further can provide a variety of functions, including timing, peripheral interfaces, voltage regulation, power management, and other control functions. Memory can be configured to store data used by the processor when performing operations.

An embodiment of the present application relates to a computer-readable storage medium, which stores a computer program. When the computer program is executed by a processor, the above data distribution methods are implemented.

That is, those skilled in the art can understand that all steps or part of the steps in implementing the methods of the above embodiments can be completed by instructing relevant hardware by a program. The program is stored in a storage medium and includes several instructions to cause equipment (which can be a microcontroller, a chip, etc.) or a processor to execute all steps or part of the steps of the methods described in various embodiments of the present application. The aforementioned storage media include: U disk, mobile hard disk, Read-Only Memory (ROM for short), Random Access Memory (RAM for short), magnetic disk or optical disk and other media that can store program code.

Those skilled in the art can understand that the above-mentioned embodiments are specific examples for implementing the present application. In practical applications, various changes can be made in form and details without departing from the spirit and scope of the present application.

## Claims

1. A data distribution method, **characterized by** comprising:
obtaining a network element group, and allocating a transmission resource of a management network element to a network element to be distributed data in the network element group, so that a network element to be distributed data that has obtained the transmission resource performs data distribution; wherein the network element group comprises a plurality of network elements to be distributed data with consistent network element attribute information, and the management network element is the network where the network element to be distributed data is located and is a network element provided with a network management function;
taking a network element to be distributed data that successfully performs data distribution as a seed network element, and obtaining a current load condition of the seed network element;
determining a transmission resource share allocated to a target network element according to the load condition and a concurrency degree of a preset seed network element, wherein the target network element is a network element in the network element group that has not obtained a transmission resource from the management network element; and
allocating a transmission resource of the seed network element to the target network element according to the transmission resource share, so that the target network element utilizes a transmission resource allocated from the seed network element to perform data distribution.

2. The data distribution method according to claim 1, wherein after the allocating the transmission resource of the seed network element to the target network element according to the transmission resource share, so that the target network element utilizes the transmission resource allocated from the seed network element to perform data distribution, the method further comprises:
taking a target network element that successfully performs data distribution as the seed network element, and executing the obtaining the current load condition of the seed network element and subsequent steps repeatedly until the data distribution is completed.

3. The data distribution method according to claim 1, wherein after the allocating the transmission resource of the management network element to the network element to be distributed data in the network element group, so that the network element to be distributed data that has obtained the transmission resource performs data distribution, the method further comprises:
obtaining a load condition of the network element group; and
dynamically adjusting the transmission resource of the management network element between the network element groups according to the load condition of the network element group.

4. The data distribution method according to claim 1, wherein the determining the transmission resource share allocated to the target network element according to the load condition and the concurrency degree of the preset seed network element comprises:
determining a transmission resource that has been occupied by the seed network element and a transmission resource that needs to be reserved according to the load condition and the concurrency degree of the preset seed network element; and
determining the transmission resource share allocated to the target network element according to the transmission resource that has been occupied by the seed network element and the transmission resource that needs to be reserved.

5. The data distribution method according to any one of claims 1 to 4, wherein the obtaining the network element group comprises:
obtaining network element attribute information of the network element to be distributed data; and
grouping the network element to be distributed data according to the network element attribute information, and obtaining the network element group.

6. The data distribution method according to claim 5, wherein the network element attribute information is network element configuration information, or data file version information adapted to the network element, or network element connectivity information;
the grouping the network element to be distributed data according to the network element attribute information, and obtaining the network element group comprises:
in response to that the network element attribute information is the network element configuration information, allocating network elements to be distributed data whose hardware configuration information in the network element configuration information and wireless configuration information in the network element configuration information are both identical to a group, and obtaining the network element group;
in response to that the network element attribute information is the data file version information adapted to the network element, allocating network elements to be distributed data whose data file version information adapted to the network element are consistent to a group, and obtaining the network element group; and
in response to that the network element attribute information is the network element connectivity information, allocating interconnected network elements to be distributed data to a group according to the network element connectivity information and a minimum routing hop rule, and obtaining the network element group.

7. The data distribution method according to claim 1, wherein after the taking the network element to be distributed data that successfully performs data distribution as the seed network element, and obtaining the current load condition of the seed network element, the method further comprises:
in response to that after the seed network element completes a task of the data distribution, recycling the transmission resource of the seed network element to the management network element.

8. The data distribution method according to claim 7, wherein after the allocating the transmission resource of the seed network element to the target network element according to the transmission resource share, so that the target network element utilizes the transmission resource allocated from the seed network element to perform data distribution, the method further comprises:
in response to that the target network element fails to utilize the allocated transmission resource to perform data distribution, allocating a transmission resource of another seed network element in the network element group to the target network element, or allocating the transmission resource of the management network element to the target network element.

9. The data distribution method according to claim 1, further comprising:
establishing a seed network element list, and updating and maintaining a number of the seed network elements, a transmission resource condition, and a data distribution condition.

10. A data distribution device, **characterized by** comprising:
a management module of a network element to be distributed data configured for obtaining a network element group, and allocating a transmission resource of a management network element to a network element to be distributed data in the network element group, so that a network element to be distributed data that has obtained the transmission resource performs data distribution; wherein the network element group comprises a plurality of network elements to be distributed data with consistent network element attribute information, and the management network element is the network where the network element to be distributed data is located and is a network element provided with a network management function;
a seed network element management module configured for taking a network element to be distributed data that successfully performs data distribution as a seed network element, and obtaining a current load condition of the seed network element; determining a transmission resource share allocated to a target network element according to the load condition and a concurrency degree of a preset seed network element, wherein the target network element is a network element in the network element group that has not obtained a transmission resource from the management network element; and
a target network element management module configured for allocating a transmission resource of the seed network element to the target network element according to the transmission resource share, so that the target network element utilizes a transmission resource allocated from the seed network element to perform data distribution.

11. A network equipment, **characterized by** comprising:
at least one processor; and
a memory communicatively connected to the at least one processor;
wherein the memory is configured to store an instruction executable by the at least one processor, and the instruction is executed by the at least one processor so that the at least one processor executes the data distribution method according to any one of claims 1 to 9.

12. A computer-readable storage medium, storing a computer program, **characterized in that** when the computer program is executed by a processor, the data distribution method according to any one of claims 1 to 9 is implemented.
